# EUROPEAN PATENT APPLICATION

(11) **EP 1 600 220 A1**
(43) Date of publication of application: **30.11.2005**
(21) Application number: 04716032.0
(22) Date of filing: 01.03.2004
(51) Int. Cl.: B09C 1/10, C02F 3/34, C02F 11/04

(54) **ADDITIVE FOR USE IN RESTORATION OF CONTAMINATED SOIL, GROUND WATER OR SEDIMENT SOIL**

(30) Priority: 03.03.2003 JP 2003055606
(71) Applicant: Ecocycle Corporation, Toyama-shi, Toyama 939-8092 (US); GZA Geoenvironmetal, Inc., Norwood, MA 02062 (US)
(72) Inventor: CHANDRAGHATGI, Shrihari, Ecocycle Corporation, Toyama-shi, Toyama 9398092 (JP); MAEDA, Shingo, Ecocycle Corporation, Toyama-shi, Toyama 9398092 (JP); NOGAWA, Kaoru, Ecocycle Corporation, Toyama-shi, Toyama 9398092 (JP); HIMI, Hideki, Ecocycle Corporation, Toyama-shi, Toyama 9398092 (JP); SCHAFFNER, I. Richard, Gza Geoenvironmental, Inc., Manchester, NH 03103-3347 (US); LAMB, Steven R., Gza Geoenvironmental, Inc., Manchester, NH 03103-3347 (US)
(74) Representative: TBK-Patent
(86) International application number: PCT/JP2004/002461
(87) International publication number: WO 2004/078375

(57) **Abstract**

An additive is provided which is used in bioremediation of soil, groundwater or sediment contaminated with organic halides, particularly with organic chlorides, which is capable of remediating contaminated sites in various geological conditions, and which enables low cost remediation work.

By the additive, which comprises a material for developing and activating a microbial consortium, a material for promoting reductive dehalogenation by anaerobic microorganisms, and a material for developing an anaerobic condition, an indigenous microbial community (microbial consortium) consumes oxygen in the soil, groundwater or sediment to put the medium of remediation in an anaerobic condition. Under the established anaerobic condition, anaerobic microorganisms utilizes the supplied electron donors or other electron donors generated in decomposition of the supplied electron donors by the additive to decompose organic halides as electron acceptors by reductive dehalogenation finally to inorganic halogen salts.

## Description

### Technical Field

The present invention relates to an additive for use in remediation of soil, groundwater or sediment which has been contaminated with organic halides, in particular, organic chlorides.

### Background Art

In recent years, contamination of soils, groundwaters or sediments with organic halides, typified by organic chlorides such as tetrachloroethylene, trichloroethylene, dichloroethylene, dioxins and polychlorinated biphenyls has become serious problems.

At present, as techniques for remediation of soils, groundwaters, sediments which have been contaminated with such organic halides, physical treatment methods such as pump and treat for groundwater and soil vapor extraction [see, for example, "Kankyo Joka Gijutsu (Environmental Solution Technology), Vol.1, No.1, pp.80-84"]. In both the methods, however, initial investment in plant and equipment and power cost are high. Further, neither method is a technique for completely rendering contaminants harmless and thus is a fundamental measure. Accordingly, development of bioremediation techniques has been expected which utilize microorganisms to decompose persistent toxic substances contained in soils, groundwaters, sediments or the like, thereby effecting decontamination.

Bioremediation is a technique of biologically decomposing and converting toxic organic compounds into harmless substances such as carbon dioxide, methane, water, inorganic salts, biomasses or the like. Recently, concept of bioremediation has been expanded to a technique of remediating hazardous waste, or contaminated soils, groundwaters or sediments. In such circumstances, aerobic microorganisms have applied for researches and developments of bioremediation of contamination with chlorocarbons in Japan.

Biostimulation is a method which, for propagating and activating specific aerobic microorganisms that live in a contaminated site to thereby promote decomposition and degradation of contaminants, comprises externally supplying necessary substances such as carbon sources, e.g., methane, air or pure oxygen, nutrient salt, or the like.

Bioaugmentation is a method which comprises carrying out mass-culturing and activation of one kind of microorganisms with excellent decomposing ability, and injecting the activated culture into the ground at a contaminated site together with oxidants to effect decontamination by decomposition of contaminants.

Further, as means for decomposing particularly organic chlorides, there may be mentioned reductive dechlorination by means of anaerobic microorganisms [see, for example, "Kankyo Joka Gijutsu (Environmental Solution Technology), Vol.1, No.1, pp.80-84"]. When an electron donor such as an organic acid is supplied to anaerobic microorganisms, the anaerobic microorganisms decompose an organic chloride by reductive dechlorination in which the organic chloride is an electron acceptor. Accordingly, when this process is applied to remediation of contamination with organic chlorides, a means for putting a contaminated area under an anaerobic condition is required.

However, these methods have the following problems. Biostimulation has a problem that heavy investment in plant and equipment and high remediation cost for introduction of an oxidant or a large amount of air are required. Bioaugmentation has a problem that decomposing ability of microorganisms depends on an environment of a contaminated area into which the microorganisms are injected, and hence, the injected microorganisms are not always allowed to sufficiently exhibit their ability. Reductive dechlorination by anaerobic microorganisms has a problem that no substantial consideration has been given to means for putting an area to be remediated in an anaerobic condition in order to utilize anaerobic microorganisms having organic halide-decomposing ability. As described above, each of the bioremediation techniques which have hitherto been developed involves such a problem, and development of a remediation technique has been desired which is capable of solving the problems.

The present invention has been made in view of the above-described problems in the conventional techniques. It is an object of the present invention to provide an additive for use in bioremediation of soil, groundwater, sediment or the like contaminated with organic halides, particularly organic chlorides, which is capable of remediating contaminated sites of various types of soil and which enables low-cost remediation work to be realized.

### Disclosure of Invention

The present invention provides an additive for use in remediation of soil, groundwater or sediment contaminated with organic halides, the additive comprising:
a material for developing and activating a microbial consortium;
a material for promoting reductive dehalogenation by anaerobic microorganisms; and
a material for developing an anaerobic condition;
the material for developing and activating a microbial consortium being at least one substance selected from the group consisting of active yeast, inactive yeast and yeast extract;
the material for promoting reductive dehalogenation being at least one substance selected from the group consisting of propionic acid, butyric acid, lactic acid and salts thereof; and
the material for developing an anaerobic condition being at least one substance selected from the group consisting of glucose, galactose, fructose, lactose, sucrose, maltose and starch.

The additive according to the present invention, which is used in remediation of soil, groundwater or sediment contaminated with organic halides, is characterized to comprise the material for developing and activating a microbial consortium.

The material for developing and activating a microbial consortium is a material which is effective, with respect to both aerobic and anaerobic microorganisms, for development and propagation of such a consortium.

For remediation of soil, groundwater or sediment contaminated with organic halides, particularly organic chlorides by means of microorganisms, it is effective to allow multiple types of microorganisms having different characteristics to effectively function.

First, indigenous aerobic microorganisms or obligate anaerobic microorganisms consume nitrate ions, sulfate ions, oxygen and the like as electron acceptors to put soil, groundwater or sediment in an anaerobic condition.

When the medium of remediation is brought into an anaerobic condition, the anaerobic condition enables obligate anaerobic microorganisms to decompose organic halides, particularly organic chloride as electron acceptors. For example, by sequential reductive dechlorination reactions, tetrachloroethylene is converted into trichloroethylene and further into dichloroetylene and finally decomposed into ethylene while forming stable inorganic salts.

As described above, by supplying the material for developing and activating a microbial consortium in whole, an environment for performing reductive dehalogenation by means of anaerobic microorganisms is rapidly provided, and consequently, remediation operation efficiently progresses.

In this connection, toxic intermediate products formed by the obligate anaerobic microorganisms in the course of the reductive dechlorination include those which are not necessarily effectively decomposed by all obligate anaerobic microorganisms (, for example, vinyl chloride and cis-1,2-dichloroetylene). However, when the microbial consortium is activated in whole, these substances can be decomposed effectively by other types of microorganisms which are constituents of the microbial consortium. Accordingly, the toxic intermediate products are less likely to remain in remediation operation by means of anaerobic microorganisms.

As described above, for decomposing organic halides, particularly organic chlorides, it is particularly important to activate indigenous microbial community (which is also referred to as microbial consortium) including both aerobic and anaerobic microorganisms in whole.

Further, the additive according to the present invention, which is used in remediation of soil, groundwater or sediment contaminated with organic halides, is characterized to comprise the material for promoting reductive dehalogenation by anaerobic microorganisms.

By supplying the material for promoting dehalogenation of organic halides, particularly organic chlorides by anaerobic microorganisms, the anaerobic microorganisms exhibit their function effectively.

Moreover, the additive according to the present invention, which is used in remediation of soil, groundwater or sediment contaminated with organic halides, is characterized to comprise the material for developing an anaerobic condition.

By positively supplying the material for developing an anaerobic condition, i.e., the material capable of effectively propagating oxygen-consuming microorganisms such as aerobic microorganisms as well as the material for developing and activating a microbial consortium in whole, oxygen is further efficiently degraded from the medium of remediation and the medium is rapidly brought into an anaerobic condition.

As described above, by supplying the multiple kinds of materials having different functions as an additive taking into consideration the function of a microbial consortium as a whole which takes part in the process of decomposition of organic halides, particularly organic chlorides, a bioremediation system is realized which is efficient and in which toxic substances are less likely to remain. Further, since the microorganisms used in remediation are anaerobic, there is no need to supply an oxidants or air, thereby enabling low cost remediation work.

It should be noted that ratio of the materials as constituents of the additive may be determined according to a type of soil in a medium of remediation to thereby enhance effect of the remediation.

In the present invention, media of remediation are soils, groundwaters, sediments or the like which have been contaminated with organic halides, particularly organic chlorides. In this connection, the term "organic halide" used herein means an aliphatic or aromatic hydrocarbon having its hydrogen atom or atoms substituted with a halogen (such as fluorine, chlorine or the like) atom or halogen atoms. For example, the organic halides cover aliphatic organic chlorides such as tetrachloroethylene, trichloroethylene and dichloroethylene; and aromatic organic chlorides, e.g., dioxins such as polychlorinated dibenzodioxins (PCDDs) and polychlorinated dibenzofurans (PCDFs), PCBs such as coplanar polychlorinated biphenyls, and chlorobenzenes. It should be noted that the above description is given by way of exemplification, and that neither the media of remediation nor the chemicals to be degraded in the present invention are restricted to those described above.

In the additive according to the present invention which is used in remediation of soil, groundwater or sediment contaminated with organic halides, the material for developing and activating a microbial consortium is characterized to be at least one substance selected from the group consisting of active yeast, inactive yeast and yeast extract.

Each of active yeast, inactive yeast and yeast is decomposed by multiple types of microorganisms which constitute the microbial consortium. In this connection, since decomposition products such as proteins, amino acids and vitamins also serve as nutrition sources for the microorganisms constituting the microbial consortium, the microbial consortium is effectively activated. By virtue of the activation of the microbial consortium, the medium of remediation is rapidly rendered anaerobic. In consequence, toxic substances are less likely to remain in the medium of remediation.

In the additive according to the present invention which is used in remediation of soil, groundwater or sediment contaminated with organic halides, the material for promoting reductive dehalogenation by anaerobic microorganisms is characterized to be at least one substance selected from the group consisting of propionic acid, butyric acid, lactic acid and salts thereof.

Propionic acid, butyric acid, lactic acid and salts thereof have excellent electron-donating properties and serve as hydrogen sources in the dehalogenation reactions of organic halides. Further, they are stably and inexpensively available.

In the additive according to the present invention which is used in remediation of soil, groundwater or sediment contaminated with organic halides, the material for developing an anaerobic condition is characterized to be at least one substance selected from the group consisting of glucose, galactose, fructose, lactose, sucrose, maltose and starch.

Each of glucose, galactose, fructose, lactose, sucrose, maltose and starch is one of saccharides which are effective nutrition sources for aerobic microorganisms. Of such saccharides, they are easily decomposable and stably and inexpensively available.

Therefore, by using these materials as an additive, remediation of soil, groundwater or sediment contaminated with organic halides, particularly organic chlorides is carried out inexpensively in a short period of time.

### Brief Description of Drawings

Fig.1 is a graphical representation showing changes in concentrations of organic chlorides and ethylene in a case of Treatment 1 in Example 1.
Fig.2 is a graphical representation showing changes in concentrations of organic chlorides and ethylene in a case of Treatment 2 in Example 1.
Fig.3 is a graphical representation showing changes in concentrations of organic chlorides and ethylene in a case of Treatment 3 in Example 1.
Fig.4 is a graphical representation showing changes in concentrations of organic chlorides and ethylene in a case of Treatment 4 in Example 1.
Fig.5 is a graphical representation showing changes in concentrations of organic chlorides and ethylene in a case of Treatment 5 in Example 1.
Fig.6 is a graphical representation showing changes in concentrations of dissolved oxygen and nitrate ions attributable to injection of an additive in Example 2.
Fig.7 is a graphical representation showing changes in concentration of sulfate ions attributable to injection of an additive in Example 2.
Fig.8 is a graphical representation showing changes in oxidation-reduction potential attributable to injection of an additive in Example 2.
Fig.9 is a graphical representation showing changes in concentrations of organic chlorides attributable to injection of an additive in Example 2.
Fig.10 is a graphical representation showing changes in concentrations of organic chlorides and ethylene attributable to injection of an additive in Example 2.

### Best Mode for Carrying Out the Invention

An embodiment of the present invention will be described hereinbelow.

In this embodiment, an appropriate mixing ratio of electron donors is determined according to a microbial community, i.e., microbial consortium which is indigenous to an contaminated area based on a study on microcosms in a laboratory. The microcosms are created out of soil, groundwater or sediment collected from a contaminated area. Additive ingredients are mixed in various ratios and the resulting additives are added to the microcosms, and the microcosms are incubated at a predetermined temperature. The contents (soils, sediments or waters) are periodically sampled from the microcosms under anaerobic condition to observe concentrations of organic chlorides, methane, ethylene, vinyl chloride, chloride ions, dissolved oxygen, nitrate ions and sulfate ions, and oxidation-reduction potentials. With respect to the organic chlorides, methane, ethylene, vinyl chloride and chloride ions, the observation is conducted to determine concentrations of contaminants and decomposition products thereof. With respect to the concentrations of dissolved oxygen and the oxidation-reduction potentials, the observation is conducted to find whether the microcosms are in obligate anaerobic conditions. When these reach 0.5mg/L and -50mV, respectively, an obligate anaerobic condition has been established. In reductive reactions by means of anaerobic microorganisms, nitrate ions and sulfate ions are consumed preferentially to the organic chlorides. Accordingly, by measuring the concentrations of nitrate ions and sulfate ions, it is possible to find whether reductive reactions have been initiated in the microcosms. Based on results of experiments for a predetermined period of time, generally for about 1 to 2 months, the optimum ratio of the additive ingredients for the medium of remediation in the contaminated area is determined.

Each of the additives is added into the soil, groundwater or sediment in the contaminated area. The additives may be in the form of a solid, liquid, slurry or the like, and the form thereof is determined based on geological conditions such as conditions of geological formations in the contaminated area and state of contamination in the contaminated area.

A microbial consortium decomposes substances contained in the additive and utilizes electron donors resulting from the decomposition to thereby consume dissolved oxygen in the soil, groundwater or sediment, putting environment of the medium of remediation in an anaerobic condition. In parallel with this, the microbial consortium consumes electron acceptors originally present in the contaminated area such as nitrate ions and sulfate ions. In the developed anaerobic condition, obligate anaerobic microorganisms contained in the microbial consortium make use of the supplied electron donors and the electron donors generated as decomposition products to decompose the organic chlorides as electron acceptors in reductive dechlorination. The decomposition of the organic chlorides in reductive dechlorination by means of the anaerobic microorganisms occurs sequentially from a compound with a higher number of chlorine atoms, and the organic chlorines are finally decomposed into inorganic chlorides.

Examples of the present invention will be given hereinbelow.

### (Example 1)

In remediation of groundwater contaminated with organic chlorides, microcosm experiments were carried out on a laboratory scale to demonstrate remediation promoting effects of additives. The groundwater used in the experiments was anaerobically collected from a site contaminated with organic chlorides such as tetrachloroethylene (hereinafter referred to as PCE), trichloroethylene (hereinafter referred to as TCE), and cis-1, 2-dichloroethylene (hereinafter referred to as c-DCE). The groundwater was filled into 125 brown glass vessels of 100ml to vessel's capacity, which had been sterilized preliminarily, and transported to the laboratory while being refrigerated at 4°C.

The following 5 additives were added to the collected water to perform comparison of remediation effects thereof. In an anaerobic condition, each of the following additives was stirred into 25 groundwater samples of the 125 groundwater samples. Air in a head space in each vessel was substituted by nitrogen gas, and then the vessel was sealed.
Treatment 1: addition of an additive prepared by mixing 0.5g of inactive dried yeast, 1.0g of glucose and 0.5g of calcium propionate
Treatment 2: addition of an additive prepared by mixing 0.5g of yeast extract, 1.0g of sucrose and 0.5g of calcium lactate
Treatment 3: addition of an additive prepared by mixing 0.5g of active dried yeast, 0.5g of lactose, 0.5g of maltose and 0.5g of sodium butyrate
Treatment 4: addition of an additive prepared by mixing 0.5g of yeast extract, 1.0g of fructose, 0.5g of galactose and 0.5g of sodium propionate
Treatment 5: control treatment in which no additive was added

Subsequently, to measure concentrations of the organic chlorides anterior to decontamination treatments, 5 samples for each treatment, i.e., 25 samples in total were taken from the 125 samples immediately before initiation of incubation. By means of a gas chromatograph, the organic chlorides and ethylene in the samples were analyzed, and initial concentrations thereof in each treatment were determined by an average value of those in the 5 samples.

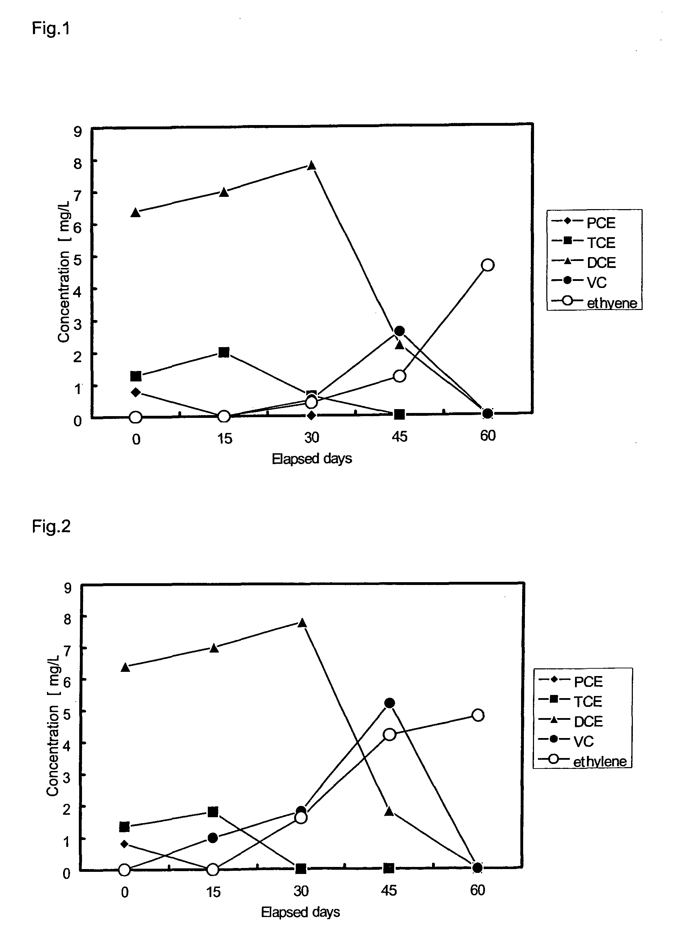

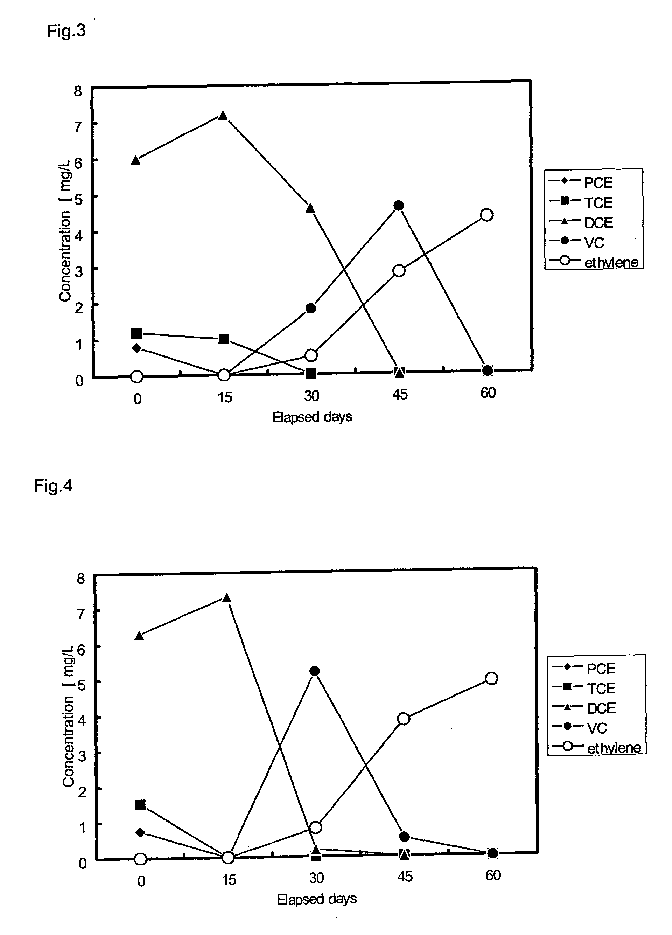

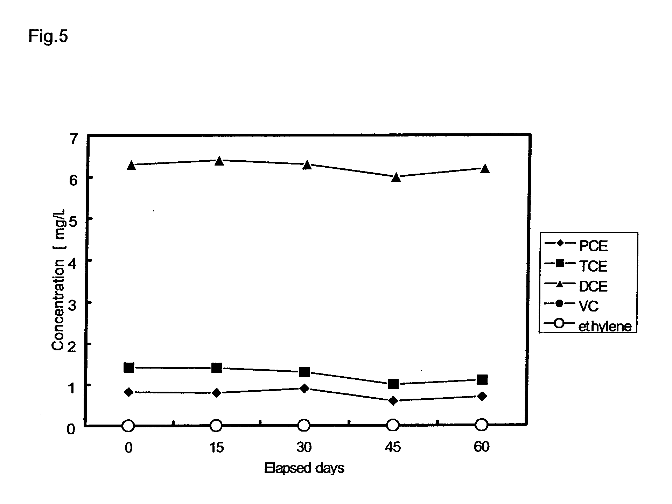

The remaining 100 samples were placed in a dark place and incubated at 25°C for 60 days. Every interval of 15 days, concentrations of the organic chlorides and ethylene contained in the 5 samples in each treatment, i.e., the 25 samples in total were measured with a gas chromatograph. Concentrations of the organic chlorides and ethylene at each time point in each treatment were determined by an average value of those in the 5 samples. Changes in the concentrations of the organic chlorides and ethylene contained in the samples subjected to the 5 treatments are shown in Figs. 1 to 5.

It is seen from Figs.1 to 4 that in the cases of the treatments 1 to 4 in which the additives were added, the highly chlorinated substances such as PCE and TCE were substantially degraded in a period of 15 to 30 days. DCE increased until 15 to 30 days after the initiation of the incubation, and then, gradually decreased and degraded in 30 to 60 days after the initiation of the incubation. The reason for the temporary increase of the concentrations of DCE is attributable to the fact that PCE and TCE were converted into DCE when dechlorinated by the microorganisms, and the rate of the conversion into DCE was in excess of that of decomposition of DCE. Vinyl chloride (VC) which are problematic in degradation of organic chlorides reached the maximum concentrations 30 to 45 days after the initiation of the incubation, and then decreased and were degraded 60 days after the initiation of the incubation. In the cases of the treatments 1 to 4, concentrations of ethylene which is one of the final products of the dechlorination of the organic chlorides by the microorganisms increased, as days passed. Therefore, in the groundwater to which the additive of the present invention in each of the treatments 1 to 4 was added and which was incubated, the contaminants such as PCE and TCE and the toxic substances formed in the decomposition thereof such as DCE and VC were degraded. On the other hand, in the treatment 5 in which no additive was added, concentrations of PCE, TCE and the like showed no substantial changes over the incubation period of 60 days. It was demonstrated from the foregoing that the use of the additives of the present invention enables rapid degradation of the organic chlorides which had contaminated the groundwater.

### (Example 2)

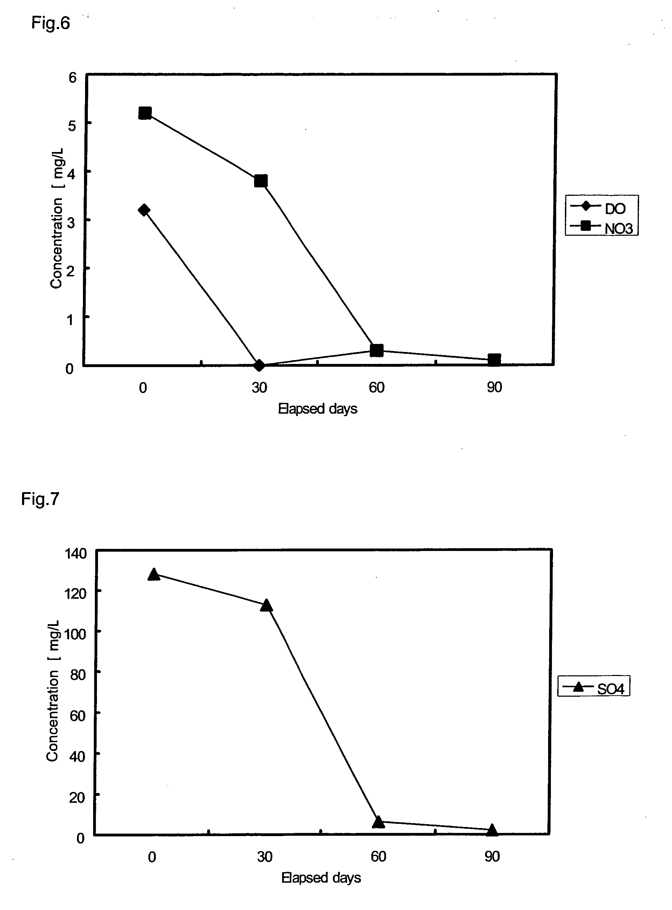

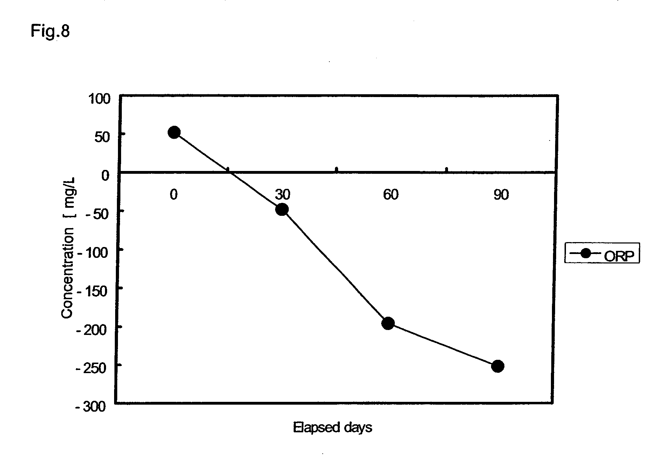

To demonstrate reductive dechlorination reaction-promoting effect of an additive in in-situ remediation of groundwater contaminated with organic chlorides, a pilot test was carried out in a site where contamination of groundwater with organic chlorides had been confirmed. The site of the pilot test measured 30m in length, 30m in width and 8m in depth from the surface of the earth. In this test, concentrations of organic chlorides [PCE, TCE, trichloroethane (hereinafter referred to as TCA), c-DCE, dichloroethane (hereinafter referred to as DCA), and vinyl chloride (hereinafter referred to as VC)], concentrations of nitrate ions, sulfate ions and dissolved oxygen (DO), and oxidation-reduction potential (ORP) were measured as parameters. The concentrations of the organic chlorides were measured in accordance with official method of analysis (JIS-K0125) by means of a gas chromatography-mass spectrometer. The concentrations of nitrate ions and sulfate ions were measured using an ion chromatograph. The additive used in this test was a mixture of 150kg of yeast extract, 100kg of glucose, 100kg of lactose, 50kg of sodium lactate, 250ml of lactic acid and 50kg of sodium propionate. While mixing 25 tons of groundwater pumped up at the site and the additive in a tank, the resultant was injected into the parent groundwater from an injection well. At an observation well located 25m downstream of flow of the groundwater from the injection well, concentrations of the organic chlorides and chemical parameters (concentrations of dissolved oxygen, nitrate ions and sulfate ions, and, and oxidation-reduction potential) were measured every month. The results of the measurements of the chemical parameters are shown in Figs.6 to 8.

It is seen from Figs.6 to 8 that electron acceptors such as the dissolved oxygen, the nitrate ions and the sulfate ions and the oxidation-reduction potential in the contaminated area drastically decreased by the injection of the additive. 30 Days after the injection of the additive, the concentration of dissolved oxygen became lower than 0.5 ml and the oxidation-reduction potential became lower than -50 mV. It is apparent therefrom that the groundwater in this site was brought into an obligate anaerobic condition by the injected additive. In such an anaerobic condition, microorganisms capable of dechlorinating organic chlorides utilize the organic chlorides as electron acceptors and decompose the same. The additive injected in the groundwater placed the groundwater contaminated with the organic chlorides in the anaerobic condition which is suitable for dechlorination by microorganisms, and further, indigenous aerobic microorganisms and obligate anaerobic microorganisms consumed electron acceptors which have been present in the contaminated area. It is considered that the conditions in which decomposition of organic chlorides by anaerobic microorganisms occurs easily were consequently developed.

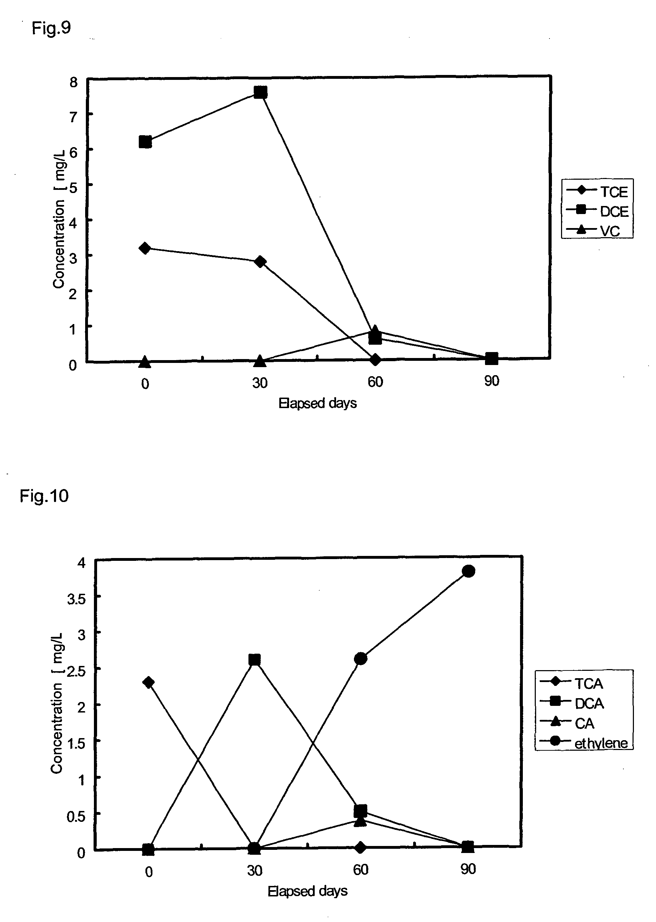

Then, changes of the concentrations of the organic chlorides in the groundwater with passage of every month after the injection of the additive are shown in Figs.9 and 10. It is seen from Fig.9 that TCE gradually decreased after the injection of the additive, and degradation thereof substantially reached completion 60 days after the injection of the additive. DCE and VC as by-products of the dechlorination of TEC reached the maximums 30 days and 60 days after the injection of the additive, respectively, and decreased thereafter, and degradation thereof reached completion 90 days after the injection of the additive. It is seen from Fig.10 that TCA as a contaminant was substantially degraded 30 days after the injection of the additive. DCA and CA which resulted from the dechlorination of TCA reached the maximums 30 days and 60 days after the injection of the additive, respectively, and decreased thereafter to reach an amount smaller than the minimum limit of detection 90 days after the injection of the additive. Ethylene which is one of the final products of the dechlorination of TCE and TCA increased in concentration, as time passed from the injection.

It is found from the above results that the groundwater was placed in an obligate anaerobic condition by the injection of the additive 30 days thereafter, TCE and TCA as contaminants in the groundwater were dechlorinated by the anaerobic microorganisms finally to ethylene and thereby rendered harmless in the 90-day pilot test. From this, the additive of the present invention is found to be effective for degradation of the organic chlorides.

It was demonstrated from the results of the pilot test carried out in the above-described contaminated area that the additive of the present invention was effective for in-situ remediation of groundwater contaminated with organic chlorides.

### (Example 3)

To demonstrate reductive dechlorination reaction-promoting effects of additives in decontamination of sediment contaminated with organic chlorides, particularly with dioxins, microcosm experiments were carried out on a laboratory scale. First, sediment and water of a canal contaminated with dioxins were collected and, while being refrigerated at 4°C, transported to the laboratory. Under an anaerobic condition, the collected sediment was placed in 24 glass vessels of 300 ml-volume in an amount of 300 ml each. Then, the following ingredients were mixed to prepare additives, and under an anaerobic condition, each of the additives for Treatments was put into 6 vessels and mixed well with the sediment. Further, the water collected from the canal was poured into each vessel until no space remained in the vessel to prepare each sample.
Treatment 1: addition of an additive prepared by mixing 0.5g of inactive dried yeast, 1.0g of glucose and 0.5g of calcium propionate
Treatment 2: addition of an additive prepared by mixing 0.5g of yeast extract, 1.0g of starch and 0.5g of calcium lactate
Treatment 3: addition of an additive prepared by mixing 0.5g of active dried yeast, 1.0g of lactose and 0.5g of sodium butyrate
Treatment 4: control treatment in which no additive was added

Initially, sediment was taken from 3 samples for each Treatment, i.e., 12 samples in total of the samples anterior to initiation of incubation to measure masses of dioxins (chlorodibenzodioxins, chlorodibenzofurans) and coplanar polychlorinated biphenyls by means of a gas chromatography-mass spectrometer (GC-MS). Method of the analysis was in accordance with "Manual for Examination and Determination of Sediment on Dioxins (published in March 2000 by Water Quality Management Division of Water Quality Bureau of Environment Agency)". With respect to each Treatment, initial concentrations determined by averaging those of 3 samples are shown in Table 1. The vessels of the remaining samples other than those subjected to the measurement of the initial concentrations ware placed in a dark place where the temperature was controlled at 25°C to incubate the samples for 180 days. Sediment was taken from each of the post-incubation samples to measure masses of dioxins and coplanar polychlorinated biphenyls by means of a gas chromatography-mass spectrometer (GC-MS). Method of the analysis was in accordance with "Manual for Examination and Determination of Sediment on Dioxins (published in March 2000 by Water Quality Management Division of Water Quality Bureau of Environment Agency)". With respect to each Treatment, results determined by averaging analyzed values of 3 samples are shown in Table 1 as an average of toxicity equivalency quantity (TEQ) posterior to the decomposition test, and a decomposition ratio [(1 - post-incubation TEQ/TEQ at the time of the initiation of the incubation) x 100].

**Table 1:**

| Decomposition Ratio of Dioxins | | | | | | | | | |
|---|---|---|---|---|---|---|---|---|---|
| | PCDDs | | | PCDFs | | | PCBs | | |
| | pre-T | 180d.1. | d.r.(%) | pre-T | 180d.1. | d.r.(%) | pre-T | 180d.1. | d.r.(%) |
| T.1 | 3280 | 216 | 93 | 612 | 126 | 79 | 1218 | 28 | 98 |
| T.2 | 3294 | 116 | 96 | 622 | 84 | 86 | 1200 | 52 | 96 |
| T.3 | 3312 | 204 | 94 | 608 | 93 | 84 | 1898 | 22 | 99 |
| T.4 | 3316 | 3326 | 0 | 625 | 620 | 1 | 1225 | 1218 | 1 |

| | |
|---|---|
| T | Treatment |
| 180d.1. | 180 days later |
| d.r. | decomposition ratio |

It is apparent from Table 1 that in the sample in Treatment 4 to which no additive was added, almost no decrease was observed in any of PCDDs, PCDFs and coplanar PCBs. On the other hand, in the samples in Treatments 1 to 3, decreases of PCDDs, PCDFs and coplanar PCBs are observed. In particular, the decomposition ratios of PCDDs and PCBs are as extremely high as more than 90%. Therefore, activation of indigenous microorganisms by each of the additives enabled promotion of degradation of the polychlorinated aromatic compounds such as PCDDs, PCDFs and coplanar PCBs.

### Industrial Applicability

As described above, by addition of the additive according to the present invention to soil, groundwater or sediment contaminated with organic halides, particularly with organic chlorides, the material for activating a microbial consortium in whole which include indigenous aerobic and anaerobic microorganisms in a medium of remediation, the material for promoting reductive dehalogenation by anaerobic microorganisms, and the material for developing an anaerobic condition are supplied to the medium of remediation. Accordingly, the microbial consortium rapidly develops an anaerobic condition, and dehalogenation efficiently proceeds under such an anaerobic condition. It is, therefore, possible to carry out remediation work in which toxic substances are less likely to remain in a short period of time.

## Claims

1. An additive for use in remediation of soil, groundwater or sediment contaminated with organic halides, said additive comprising:
a material for developing and activating a microbial consortium;
a material for promoting reductive dehalogenation by anaerobic microorganisms; and
a material for developing an anaerobic condition;
said material for developing and activating a microbial consortium being at least one substance selected from the group consisting of active yeast, inactive yeast and yeast extract;
said material for promoting reductive dehalogenation being at least one substance selected from the group consisting of propionic acid, butyric acid, lactic acid and salikots thereof; and
said material for developing an anaerobic condition being at least one substance selected from the group consisting of glucose, galactose, fructose, lactose, sucrose, maltose and starch.
